Europäisches Patentamt

European Patent Office

Office européen des brevets

(19)

(11) Veröffentlichungsnummer: **0 073 846**
**A1**

(12) ## EUROPÄISCHE PATENTANMELDUNG

(21) Anmeldenummer: 81106878.2

(22) Anmeldetag: 03.09.81

(51) Int. Cl.³: **H 02 P 7/62**
**B 60 L 1/00, B 61 D 27/00**

(43) Veröffentlichungstag der Anmeldung:
16.03.83 Patentblatt 83/11

(84) Benannte Vertragsstaaten:
AT BE DE FR IT LU NL

(71) Anmelder: Fried. Krupp Gesellschaft mit beschränkter Haftung
Altendorfer Strasse 103
D-4300 Essen 1(DE)

(72) Erfinder: Seeger, Herbert
Langeoogweg 1
D-4300 Essen 1(DE)

(54) **Drehzahlregeleinrichtung eines Drehstrom-Lüfter-Motors für eine Klimaanlage.**

(57) Zum Betreiben eines Drehstrom-Lüfter-Motors (1) für die Klimaanlage eines Schienenfahrzeugs sind bisher Drehstromwechselrichter mit konstanter Frequenz zum Einsatz gelangt.

Damit keine Zugluft in dem Schienenfahrzeug - bei unterschiedlicher Anzahl von Reisenden - entsteht, ist ein Drehstromwechselrichter vorgesehen, dessen Frequenz und Spannung mittels eines Temperatur- (10) und Luftfeuchtigkeitsmeßwertgebers (11) geregelt wird, und zwar über eine halbgesteuerte Gleichrichterbrücke (5), die mit den beiden vorgenannten Meßwertgebern (10; 11) in Verbindung steht und die dem Drehstromwechselrichter vorgeschaltet ist. Der Gleichrichterbrücke (5) ist ein Wechselrichter mit einem Wechselrichtertransformator (2) in Sparschaltung vorgeschaltet, der mit hoher Frequenz betrieben wird und an das Bordnetz des Schienenfahrzeugs angeschlossen ist. Dadurch wird erreicht, daß das Gewicht des Wechselrichters klein gehalten wird und er außerdem einen geringen Platzbedarf aufweist.

EP 0 073 846 A1

0073846

- 1 -

FRIED. KRUPP GESELLSCHAFT MIT BESCHRÄNKTER HAFTUNG
in Essen

Drehzahlregeleinrichtung eines Drehstrom-Lüfter-
Motors für eine Klimaanlage

Die Erfindung betrifft eine Energieversorgungseinrichtung für einen an einem Schienenfahrzeug angeordneten Drehstrom-Lüfter-Motor für eine Klimaanlage,
der aus dem Bordnetz des Schienenfahrzeugs gespeist
wird und dem ein Drehstromwechselrichter vorgeschaltet ist.

Es sind Energieversorgungseinrichtungen gemäß dem
Oberbegriff des Patentanspruchs 1 bekannt, bei denen
der Drehstrom-Lüfter-Motor über einen Drehstromwechselrichter mit konstanter Frequenz gespeist
wird.

Bei solchen Energieversorgungseinrichtungen wird
der Drehstrom-Lüfter-Motor mit solcher Drehzahl betrieben, daß alle Reisenden in einem vollbesetzten
Reisezugwagen mit ausreichender Frischluft versorgt
werden. Befinden sich dagegen nur einige Reisende
in dem Reisezugwagen, so entsteht Zugluft, wodurch
das Wohlbefinden der Reisenden gestört wird.

Hier will die Erfindung Abhilfe schaffen. Die Erfindung, wie sie in dem Anspruch 1 gekennzeichnet ist,
löst die Aufgabe, die Drehzahl eines Drehstrom-Lüfter-Motors mittels eines Temperatur- und Luftfeuchtigkeitsmeßwertgebers so zu regeln, daß für eine ausreichende Frischluftrate und eine möglichst geringe Luftbewegung im Aufenthaltsbereich von Personen in einem Reisezugwagen gesorgt ist. Dabei
soll das Gewicht der Anlage gering sein. Deshalb
ist ein Wechselrichter vorgesehen, der einen Wechselrichterspartransformator aufweist und der mit
hoher Frequenz betrieben wird.

Die durch die Erfindung erreichten Vorteile sind
im wesentlichen darin zu sehen, daß durch den Einsatz eines Wechselrichters, einer halbgesteuerten
Gleichrichterbrücke, deren Ausgangsspannung mittels
eines Luftfeuchigkeits- und Temperaturmeßwertgebers
gesteuert wird, und eines Drehstromwechselrichters,
dessen Frequenz mittels der Ausgangsspannung des
Gleichrichters gesteuert wird, ein Drehstrom-Lüfter-
Motor einer Klimaanlage drehzahlmäßig so gesteuert
wird, daß in einem Reisezugwagen ein zugluftfreies
Klima herrscht; und zwar unabhängig von der Anzahl
der Personen, die sich im Reisezugwagen befinden.

Vorteilhaft ist es, wenn der Drehstromwechselrichter
drei Wechselstromwechselrichter aufweist, wobei die
Mittelpunktanzapfungen der Wechselrichtertransformatoren zusammengeschaltet sind und den Sternpunkt
des Drehstromsystems bilden, denn diese Wechselrichtertransformatoren besitzen ein kleines Gewicht und
benötigen wenig Platz.

- 3 -

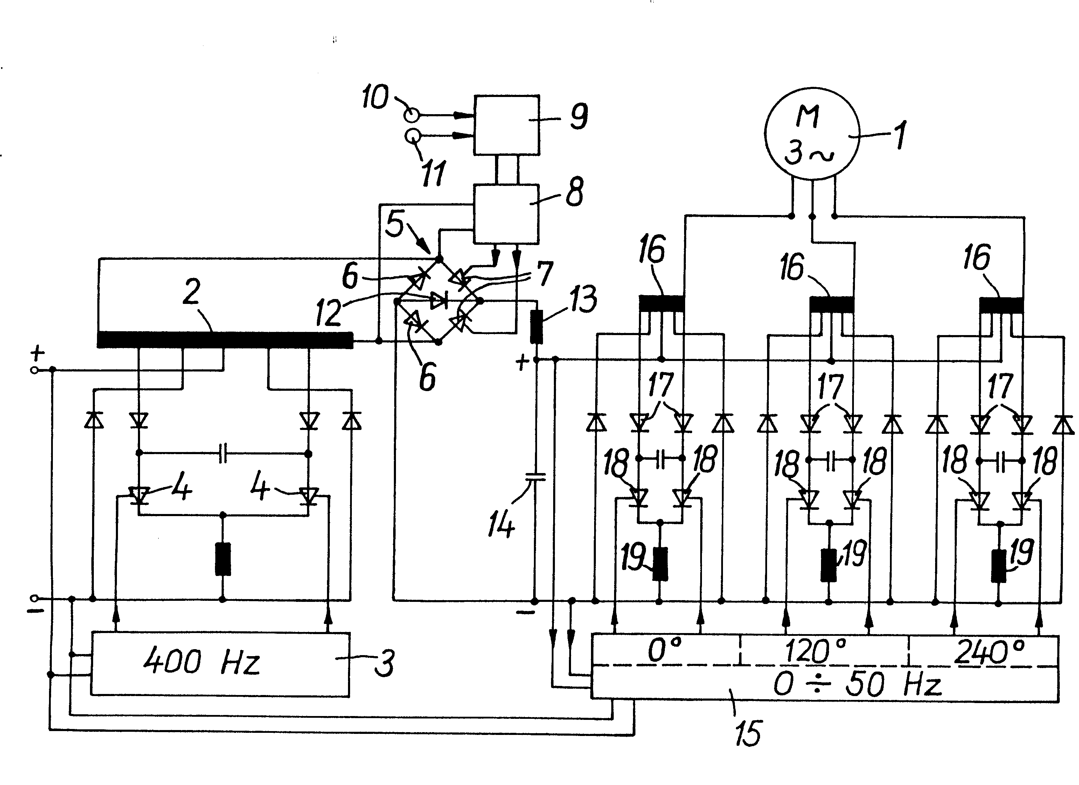

Ein Ausführungsbeispiel der Erfindung ist in der Zeichnung,die ein Übersichtsschaltbild einer Drehzahlregeleinrichtung eines Drehstrom-Lüfter-Motors für eine Klimaanlage zeigt, dargestellt und wird im folgenden näher beschrieben.

Der Drehzahlregeleinrichtung des Drehstrom-Lüfter-Motors 1 ist ein Thyristor-Wechselstrom-Wechselrichter in Mittelpunktschaltung vorgeschaltet. Dieser Thyristor-Wechelstrom-Wechselrichter besitzt einen Wechselrichterspartransformator 2 und einen Impulsgeber 3, durch die die Thyristoren 4 des Thyristor-Wechselstrom-Wechselrichters mit einer Impulsfrequenz von 400 Hz angesteuert werden. Der Thyristor-Wechselstrom-Wechselrichter ist eingangsseitig mit dem Bordnetz eines Schienenfahrzeugs verbunden. Am Ausgang des Thyristor-Wechselstrom-Wechselrichters ist eine halbgesteuerte Gleichrichterbrücke 5 in Graetzschaltung angeschlossen, die zwei Gleichrichter 6 und zwei Thyristoren 7 aufweist. Die Steuergitter und die Kathoden der Thyristoren 7 sind an einem Ansteuergerät 8 angeschlossen. Dem Ansteuergerät 8 ist ein Rechner 9 vorgeschaltet, der eingangsseitig mit einem Temperatur- 10 und Luftfeuchtigkeitsmeßwertgeber 11 verbunden ist und der diese Meßwerte verarbeitet und ein Signal abgibt, wodurch der Mittelwert der Ausgangsspannung der Gleichrichterbrücke 5 mittels Phasenanschnitt gesteuert wird. Ist z.B. die Luftfeuchtigkeit hoch, so stellt sich eine hohe Ausgangsspannung ein; ist sie dagegen klein, so stellt sich eine niedrige Ausgangsspannung ein. In dem Aus-

- 4 -

gangskreis der Gleichrichterbrücke 5 liegt eine Freilaufdiode 12 und dazu parallel eine Glättungsdrossel 13 und ein Stützkondensator 14 in Reihenschaltung. An dem Stützkondensator 14 ist ein Drehstromwechselrichter und ein mit diesem Drehstromwechselrichter zusammengeschalteter Dreikanal-Taktgeber 15 signalflußmäßig angeschlossen. Die Höhe der Ausgangsspannung des Drehstrom-Wechselrichters ist proportional zu der Höhe des Mittelwertes der Ausgangsspannung der Gleichrichterbrücke 5. Der Drehstromwechselrichter besitzt drei Wechselstrom-Wechselrichter in Mittelpunktschaltung. Die Mittelpunktanzapfungen der zugehörigen Wechselrichtertransformatoren 16 sind miteinander und mit dem positiven Pol des Stützkondensators 14 verbunden. Die beiden Wicklungsenden der Wechselrichtertransformatoren 16 sind jeweils über eine von sechs Sperrdioden 17 mit jeweils einem von sechs Thyristoren 18 und drei Kommutierungsdrosseln 19 mit dem negativen Pol des Stützkondensators 14 verbunden. An jeweils einem - elektrisch gleichartigen - Wicklungsende der Wechselrichtertransformatoren ist der Drehstrom-Lüfter-Motor angeschlossen. Bei dieser Beschaltung der Wechselrichtertransformatoren werden diese als Wechselrichterspartransformatoren und in Verbindung mit den Mittelpunktanzapfungen als Drehstromtransformator in Sternschaltung eingesetzt. Bei dieser Schaltung werden die sonst - wenn drei reine Wechselstrom-Wechselrichter als Drehstromwechselrichter eingesetzt werden - fließenden Ausgleichsströme - die sogenannten $60^{\circ}$-Pendelströme - über den Drehstrom-Lüfter-Motor vermieden. Demzufolge kann dieser baugrößenmäßig kleiner ausgelegt werden.

Der Dreikanal-Taktgeber 15 besitzt drei Kanäle. Der erste Kanal steuert den in der Zeichnung links dargestellten Thyristor 17 des ersten Wechselstrom-Wechselrichters des Drehstromwechselrichters an. Gleichzeitig wird auch der zweite und der dritte Kanal angesteuert, wodurch der zweite Kanal den in der Zeichnung links dargestellten Thyristor 17 des zweiten Wechselstrom-Wechselrichters 120° elektrisch (6,666 ms bei 50 Hz) und der dritte Kanal den in der Zeichnung links dargestellten Thyristor 17 des dritten Wechselstrom-Wechselrichters 240° elektrisch (13,333 ms bei 50 Hz) später ansteuert. Der zweite Thyristor 17 jedes Wechselstrom-Wechselrichters wird 180° elektrisch (10 ms) nach dem Zünden des ersten Thyristors 17 jedes Wechselstrom-Wechelrichters angesteuert. Danach werden wieder die ersten Thyristoren 17, dann die zweiten Thyristoren 17 angesteuert usw.

Den drei Kanälen des Dreikanal-Taktgebers 15 ist ein Frequenzgeber vorgeschaltet, der die Ausgangsspannung der Gleichrichterbrücke 5 so auswertet, daß der Frequenzgeber ein Spannungssignal abgibt, dessen Frequenz proportional zur Höhe des Mittelwertes der Ausgangsspannung der Gleichrichterbrücke 5 ist. Die Höhe der Ausgangsspannung des Drehstromwechselrichters - Drehstromspannung - ist proportional zur Höhe des Mittelwertes der Ausgangsspannung der Gleichrichterbrücke 5. Wird viel Frischluft benötigt, so wird die

- 6 -

Ausgangsspannung der Gleichrichterbrücke 5 erhöht und damit proportional zu dieser auch die Frequenz und die Höhe der Drehstromspannung sowie auch die Drehzahl des Drehstrom-Lüfter-Motors 1. Wird dagegen wenig Frischluft benötigt, so wird die Frequenz gesenkt und die Drehzahl des Drehstrom-Lüfter-Motors 1 verringert.

Das Ansteuergerät 8 weist auch eine Verzögerungsschaltung auf, durch die der Mittelwert der Ausgangsspannung der Gleichrichterbrücke 5 bei Inbetriebnahme des Drehstrom-Lüfter-Motors 1 langsam von 0 Volt bis zur Arbeitsspannung geändert wird. Dadurch bleibt der Anlaufstrom des Drehstrom-Lüfter-Motors 1 klein, und die elektronischen Bauelemente der Energieversorgungseinrichtung können stromflußmäßig kleiner ausgelegt werden.

Anstelle des Thyristor-Wechselstrom-Wechselrichters kann auch ein Transistor-Wechselstrom-Wechselrichter eingesetzt werden. Die Thyristoren 7 der Gleichrichterbrücke 5 können durch zwei Transistoren und die drei Wechselstrom-Wechselrichter des Drehstromwechselrichters können durch drei Transistor-Wechselstrom-Wechselrichter ersetzt werden.

A n s p r ü c h e :

1. Energieversorgungseinrichtung für einen an einem Schienenfahrzeug angeordneten Drehstrom-Lüfter-Motor für eine Klimaanlage, der aus dem Bordnetz des Schienenfahrzeugs gespeist wird und dem ein Drehstromwechselrichter vorgeschaltet ist, dadurch gekennzeichnet,

daß dem Drehstromwechselrichter (15, 16, 17, 18, 19) eine gesteuerte Gleichrichterbrücke (5) und ein Wechselrichter (2, 3, 4) vorgeschaltet sind, daß der Wechselrichter einen Spartransformator (2) aufweist und mit hoher Frequenz - insbesondere von 200 Hz $<$ f $<$ 20 kHz - betrieben wird, daß die Gleichrichterbrücke (5) wenigstens zwei steuer- oder ansteuerbare Halbleiterelemente (7) aufweist, deren Steuergitter mit einem Temperatur-(10) und Luftfeuchtigkeitsmeßwertgeber (11) derart in Verbindung stehen, daß bei hoher Temperatur und hoher Luftfeuchtigkeit des Raumklimas eine höhere Ausgangsspannung am Ausgang der Gleichrichterbrücke (5) ansteht als bei tiefer Temperatur und geringerer Luftfeuchtigkeit, und daß der Drehstromwechselrichter einen Dreikanal Taktgeber (15) aufweist, der als Eingangssignal die Höhe der Ausgangsspannung der Gleichrichterbrücke (5) derart verwertet, daß der Drehstromwechselrichter bei kleiner Ausgangsspannung mit einer niedrigeren Frequenz betrieben wird als bei hoher Ausgangsspannung.

2. Energieversorgungseinrichtung nach Anspruch 1, dadurch gekennzeichnet, daß der Drehstromwechselrichter drei Wechselstrom-Wechselrichter in Mittelpunktschaltung aufweist, daß die Mittelpunktanzapfungen der Wechselstrom-Wechselrichtertransformatoren (16) miteinander und mit dem Pluspol der Gleichrichterbrücke (5) verbunden sind und den Sternpunkt des Drehstromsystems bilden und daß an dem elektrisch gleichen Wicklungsende jedes Wechsel-strom-Wechselrichtertransformators (18) der Dreh-strom-Lüfter-Motor (1) angeschlossen ist.

**Europäisches Patentamt**

# EUROPÄISCHER RECHERCHENBERICHT

EP 81 10 6878.2

| | EINSCHLÄGIGE DOKUMENTE | | KLASSIFIKATION DER ANMELDUNG (Int Cl³) |
|---|---|---|---|
| Kategorie | Kennzeichnung des Dokuments mit Angabe, soweit erforderlich, der maßgeblichen Teile | betrifft Anspruch | |
| X | EP - A1 - 0 015 462 (F. KRUPP) <br><br> * Seite 12, Zeile 1 bis Seite 14, Zeile 31 * <br><br> -- | 1,2 | H 02 P 7/62 <br><br> B 60 L 1/00 <br><br> B 61 D 27/00 |
| X | DE - A - 2 027 522 (LICENTIA) <br><br> * Seite 3, Absätze 1, 2 * <br><br> -- | 1 | |
| Y | PETROLEUM ENGINEER INTERNATIONAL, <br> Band 52, Nr. 4, 15. März 1980 <br> Dallas, Texas <br> D.N. ALCOCK "Application of Variable-Frequency Drives to Deep-Well Submersible Pumps" <br> Seiten 36 bis 44 <br> * Seite 42, linke Spalte, Absatz 3 ff.; Fig. 2 * <br><br> -- | 1 | RECHERCHIERTE SACHGEBIETE (Int. Cl³) <br><br> B 60 L 1/00 <br><br> B 61 D 27/00 <br><br> H 02 M 3/00 <br><br> H 02 P 7/00 |
| Y | DE - B2 - 2 253 739 (SIEMENS) <br><br> * Spalte 3, Zeile 13 bis Spalte 4, Zeile 12 * <br><br> -- | 1 | |
| A | US - A - 4 024 444 (S.B. DEWAN et al.) <br><br> * Spalte 2, Zeile 59 bis Spalte 3, Zeile 7 * <br><br> ---- | | KATEGORIE DER GENANNTEN DOKUMENTE <br><br> X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D: in der Anmeldung angeführtes Dokument <br> L: aus andern Gründen angeführtes Dokument <br><br> &: Mitglied der gleichen Patentfamilie, übereinstimmendes Dokument |

| X | Der vorliegende Recherchenbericht wurde für alle Patentansprüche erstellt. |
|---|---|

| Recherchenort | Abschlußdatum der Recherche | Prüfer |
|---|---|---|
| Berlin | 29-04-1982 | GESSNER |

EPA form 1503.1 06.78